# EUROPÄISCHE PATENTANMELDUNG

(11) **EP 4 012 879 A1**
(43) Veröffentlichungstag der Anmeldung: **15.06.2022**
(21) Anmeldenummer: 20213076.1
(22) Anmeldetag: 10.12.2020
(51) Int. Cl.: H02J 7/00

(54) **VERFAHREN UND SYSTEM ZUM FREIGEBEN EINER ABGABE EINES MOTORANGETRIEBENEN BEARBEITUNGSGERÄTS UND/ODER EINES AKKUPACKS ZUR VERSORGUNG EINES BEARBEITUNGSGERÄTS MIT ELEKTRISCHER ANTRIEBSLEISTUNG AN EINE ABGABESTELLE**

(71) Anmelder: Andreas Stihl AG & Co. KG, 71336 Waiblingen (DE)
(72) Erfinder: Böker, Robert, 71336 Waiblingen (DE); Weiß, Kerstin, 71540 Murrhardt (DE); Häfele, Mario, 71364 Winnenden (DE)
(74) Vertreter: Patentanwälte Ruff, Wilhelm, Beier, Dauster & Partner mbB

(57) **Zusammenfassung**

Die Erfindung bezieht sich auf ein Verfahren zum Freigeben einer Abgabe eines motorangetriebenen Bearbeitungsgeräts (1) und/oder eines Akkupacks (50) zur Versorgung eines Bearbeitungsgeräts (1) mit elektrischer Antriebsleistung (AL) an eine Abgabestelle (2), wobei an und/oder in dem Bearbeitungsgerät (1) und/oder dem Akkupack (50) eine Sendeeinrichtung (3) angeordnet ist, wobei die Sendeeinrichtung (3) zum kabellosen Senden von Betriebs- und/oder Zustandsdaten (BZD) des Bearbeitungsgeräts (1) und/oder des Akkupacks (50) und eines Identifikators (ID) ausgebildet ist, und wobei das Verfahren die Schritte aufweist:
a) mindestens Identifizieren des Bearbeitungsgeräts (1) und/oder des Akkupacks (50) und/oder der Sendeeinrichtung (3) basierend auf dem gesendeten Identifikator (ID), und
b) Freigeben der Abgabe des Bearbeitungsgeräts (1) und/oder des Akkupacks (50) an die Abgabestelle (2) in Abhängigkeit eines Ergebnisses mindestens des Identifizierens.

## Beschreibung

### ANWENDUNGSGEBIET UND STAND DER TECHNIK

Die Erfindung bezieht sich auf ein Verfahren und ein System zum Freigeben einer Abgabe eines motorangetriebenen Bearbeitungsgeräts und/oder eines Akkupacks zur Versorgung eines Bearbeitungsgeräts mit elektrischer Antriebsleistung an eine Abgabestelle.

### AUFGABE UND LÖSUNG

Der Erfindung liegt als Aufgabe die Bereitstellung eines Verfahrens und eines Systems zum Freigeben einer Abgabe eines motorangetriebenen Bearbeitungsgeräts und/oder eines Akkupacks zur Versorgung eines Bearbeitungsgeräts mit elektrischer Antriebsleistung an eine Abgabestelle zugrunde, wobei das Verfahren und das System, insbesondere jeweils, verbesserte Eigenschaften aufweisen.

Die Erfindung löst diese Aufgabe durch die Bereitstellung eines Verfahrens mit den Merkmalen des Anspruchs 1 und eines Systems mit den Merkmalen des Anspruchs 14. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Freigeben bzw. Zulassen bzw. Gewähren bzw. Autorisieren einer Abgabe eines motorangetriebenen Bearbeitungsgeräts und/oder eines Akkupacks zur Versorgung eines, insbesondere des, Bearbeitungsgeräts mit elektrischer Antriebsleistung an, insbesondere in, eine, insbesondere elektrische, Abgabestelle ausgebildet bzw. konfiguriert bzw. vorgesehen. An und/oder in dem Bearbeitungsgerät und/oder dem Akkupack ist eine, insbesondere elektrische, Sendeeinrichtung angeordnet, insbesondere befestigt. Die Sendeeinrichtung ist zum, insbesondere automatischen, kabellosen Senden von Betriebs- und/oder Zustandsdaten, insbesondere eines Werts der Betriebs- und/oder Zustandsdaten, des Bearbeitungsgeräts und/oder des Akkupacks und eines, insbesondere eindeutigen, Identifikators, insbesondere eines Werts des Identifikators, ausgebildet bzw. konfiguriert. Das Verfahren umfasst bzw. weist die Schritte auf: a) mindestens Identifizieren, insbesondere automatisches Identifizieren, des Bearbeitungsgeräts und/oder des Akkupacks und/oder der Sendeeinrichtung basierend auf dem gesendeten Identifikator. b) Freigeben, insbesondere automatisches Freigeben, bzw. Zulassen bzw. Gewähren bzw. Autorisieren der Abgabe des Bearbeitungsgeräts und/oder des Akkupacks, insbesondere mit der Sendeeinrichtung, an die Abgabestelle in Abhängigkeit eines, insbesondere positiven, Ergebnisses mindestens des Identifizierens.

Das Verfahren, insbesondere das Identifizieren, ermöglicht eine Abgabe unbekannter Bearbeitungsgeräte und/oder unbekannter Akkupacks zu vermeiden.

Zusätzlich oder alternativ ermöglicht das Verfahren, insbesondere das Identifizieren basierend auf dem Identifikator gesendet mittels der Sendeeinrichtung, angeordnet an und/oder in dem Bearbeitungsgerät und/oder dem Akkupack, dass die Abgabe einfach bzw. unkompliziert sein kann. Insbesondere brauchen/braucht bzw. können/kann das Bearbeitungsgerät und/oder der Akkupack nicht basierend auf einem Identifikator gesendet mittels einer getrennten bzw. separaten Identifikatoreinrichtung oder manuell eingegeben, insbesondere durch einen Abgeber, identifiziert werden.

Weiter zusätzlich oder alternativ ermöglicht das Verfahren einen Synergieeffekt bzw. eine zusätzliche Verwendung der Sendeeinrichtung ausgebildet zum kabellosen Senden der Betriebs- und/oder Zustandsdaten und des Identifikators, insbesondere ermöglichend eine Zuordnung der, insbesondere gesendeten, Betriebs- und/oder Zustandsdaten zu dem Bearbeitungsgerät und/oder dem Akkupack. Insbesondere kann die Abgabe für eine Reinigung, eine Wartung und/oder eine Reparatur und/oder eine Rückgabe am Ende einer Leihe und/oder eines Sharings des Bearbeitungsgeräts und/oder des Akkupacks sein. Dafür können die Betriebs- und/oder Zustandsdaten hilfreich sein.

Weiter zusätzlich oder alternativ ermöglicht das Verfahren die Abgabe außerhalb von Öffnungszeiten einer Werkstatt, insbesondere ausführend die Reinigung, die Wartung und/oder die Reparatur, und/oder eines Verleihs und/oder eines Sharing-Dienstleisters.

Somit ermöglicht dies eine hohe Abgeber-Freundlichkeit.

Insbesondere können/kann das Bearbeitungsgerät und/oder der Akkupack durch einen, insbesondere den, Abgeber abgegeben werden.

Das Bearbeitungsgerät kann ein handgeführtes, insbesondere bodengeführtes und/oder handgetragenes, Bearbeitungsgerät sein. Insbesondere handgeführtes, insbesondere handgetragenes, Bearbeitungsgerät kann bedeuten, dass das Bearbeitungsgerät eine Masse von maximal 50 Kilogramm (kg), insbesondere von maximal 20 kg, insbesondere von maximal 10 kg, aufweisen kann. Zusätzlich oder alternativ kann das Bearbeitungsgerät einen Elektroantriebsmotor und/oder einen Verbrennungsantriebsmotor aufweisen.

Die Abgabestelle kann eine Abgabe- und Abholstelle, insbesondere zur Abholung eines, insbesondere des, Bearbeitungsgeräts und/oder eines, insbesondere des, Akkupacks, sein. Zusätzlich oder alternativ kann die Abgabestelle eine, insbesondere immobile, Abgabestation oder eine mobile Abgabestelle, insbesondere auf und/oder in einem Pickup, einem Kastenwagen oder einem Bus, sein.

Das Bearbeitungsgerät und/oder der Akkupack können/kann die Sendeeinrichtung aufweisen.

Die Sendeeinrichtung kann eine Sendeantenne aufweisen und zum kabellosen Senden der Betriebs- und/oder Zustandsdaten und des Identifikators mittels der, insbesondere selben, Sendeantenne ausgebildet sein.

Das Verfahren kann, insbesondere den Schritt, aufweisen: Kabelloses Senden, insbesondere automatisches und/oder wiederholtes, insbesondere periodisches, Senden, des Identifikators, insbesondere und der Betriebs- und/oder Zustandsdaten, mittels der Sendeeinrichtung. Zusätzlich oder alternativ kann das Verfahren, insbesondere den Schritt, aufweisen: Kabelloses Empfangen, insbesondere automatisches Empfangen, des gesendeten Identifikators, insbesondere und der gesendeten Betriebs- und/oder Zustandsdaten, insbesondere zeitlich nach dem Senden und/oder vor dem Schritt a).

Der Schritt b) kann zeitlich nach dem Schritt a) ausgeführt werden.

Der Identifikator und/oder die Betriebs- und/oder Zustandsdaten können/kann in einem Speicher des Bearbeitungsgeräts und/oder des Akkupacks und/oder der Sendeeinrichtung hinterlegt bzw. gespeichert sein. Zusätzlich oder alternativ kann der Identifikator werkseitig vorgegeben sein.

An und/oder in dem Bearbeitungsgerät und/oder dem Akkupack kann die Sendeeinrichtung werkseitig oder nachgerüstet angeordnet sein. Zusätzlich oder alternativ kann die Sendeeinrichtung ein Teil des Bearbeitungsgeräts und/oder des Akkupacks sein, insbesondere wobei mit anderen Teilen des Bearbeitungsgeräts und/oder des Akkupacks die Sendeeinrichtung, insbesondere mechanisch, verbunden sein kann. Alternativ kann die Sendeeinrichtung getrennt bzw. separat von dem Bearbeitungsgerät und/oder dem Akkupack ausgebildet sein. Dies ermöglicht eine Nachrüstung der Sendeeinrichtung an und/oder in dem Bearbeitungsgerät und/oder dem Akkupack.

In Abhängigkeit eines negativen Ergebnisses mindestens des Identifizierens braucht bzw. kann die Abgabe nicht freigegeben werden.

In einer Weiterbildung der Erfindung umfasst bzw. weist der Schritt a) auf: Kontrollieren, insbesondere automatisches Kontrollieren, bzw. Überprüfen einer Berechtigung zum Freigeben der Abgabe basierend auf dem gesendeten Identifikator. Der Schritt b) umfasst bzw. weist auf: Freigeben der Abgabe in Abhängigkeit eines, insbesondere positiven, Ergebnisses des Kontrollierens. Dies ermöglicht eine Abgabe unberechtigter Bearbeitungsgeräte und/oder unberechtigter Akkupacks zu vermeiden. Insbesondere kann die Berechtigung eine Freigabe- bzw. Zulassungsberechtigung sein. Zusätzlich oder alternativ kann die Berechtigung auf einer Reservierung bzw. einer Anmeldung bzw. einer Vorankündigung der Abgabe des Bearbeitungsgeräts und/oder des Akkupacks basieren. Weiter zusätzlich oder alternativ kann die Berechtigung auf einem Werkstattauftrag, einem Leihvertrag und/oder einem Sharingvertrag für das Bearbeitungsgerät und/oder den Akkupack basieren. Weiter zusätzlich oder alternativ kann die Berechtigung auf einem Bekanntsein, insbesondere einer Hinterlegung bzw. einer Speicherung, des Identifikators oder einer auf dem Identifikator basierenden Identifikatorinformation basieren. Weiter zusätzlich oder alternativ braucht bzw. kann in Abhängigkeit eines negativen Ergebnisses des Kontrollierens die Abgabe nicht freigegeben werden.

In einer Weiterbildung der Erfindung umfasst bzw. weist der Schritt a), insbesondere das Identifizieren und/oder das Kontrollieren, auf: Vergleichen, insbesondere automatisches Vergleichen, des gesendeten Identifikators oder einer auf dem gesendeten Identifikator basierenden Identifikatorinformation, insbesondere eines Werts der Identifikatorinformation, mit einer, insbesondere hinterlegten bzw. gespeicherten, Anzahl, insbesondere Mehrzahl, von Vergleichsinformationen, insbesondere Werten der Vergleichsinformationen, insbesondere einer Anzahl, insbesondere Mehrzahl, von Vergleichsidentifikatoren, insbesondere Werten der Vergleichsidentifikatoren. Der Schritt b) umfasst bzw. weist auf: Freigeben der Abgabe in Abhängigkeit eines, insbesondere positiven, Ergebnisses des Vergleichens. Dies ermöglicht eine Abgabe unhinterlegter bzw. ungespeicherter Bearbeitungsgeräte und/oder unhinterlegter bzw. ungespeicherter Akkupacks zu vermeiden. Insbesondere kann die Anzahl von Vergleichsinformationen auf einer Reservierung bzw. einer Anmeldung bzw. einer Vorankündigung der Abgabe des Bearbeitungsgeräts und/oder des Akkupacks basieren. Zusätzlich oder alternativ kann die Anzahl von Vergleichsinformationen auf einem Werkstattauftrag, einem Leihvertrag und/oder einem Sharingvertrag für das Bearbeitungsgerät und/oder den Akkupack basieren. Weiter zusätzlich oder alternativ kann die Anzahl von Vergleichsinformationen auf einem Bekanntsein, insbesondere einer Hinterlegung bzw. einer Speicherung, des Identifikators oder der Identifikatorinformation basieren. Weiter zusätzlich oder alternativ kann die Anzahl von Vergleichsinformationen in einer, insbesondere elektronischen, Datenbank hinterlegt bzw. gespeichert sein. Weiter zusätzlich oder alternativ braucht bzw. kann in Abhängigkeit eines negativen Ergebnisses des Vergleichens die Abgabe nicht freigegeben werden.

In einer Weiterbildung der Erfindung umfasst bzw. weist die Abgabestelle mindestens eine Abgabeöffnung und mindestens einen Abschluss der Abgabeöffnung auf. Der Schritt b) umfasst bzw. weist auf: Freigeben, insbesondere automatisches Freigeben, eines Öffnens und/oder eines Schließens, insbesondere eines Verschließens und/oder durch den Abgeber, und/oder Öffnen, insbesondere automatisches Öffnen, und/oder Schließen, insbesondere automatisches Schließen und/oder Verschließen, des Abschlusses, insbesondere eines Schlosses des Abschlusses, in Abhängigkeit des, insbesondere positiven, Ergebnisses des Identifizierens. Dies ermöglicht eine unbefugte Entnahme eines abgegebenen Bearbeitungsgeräts und/oder eines abgegebenen Akkupacks zu verhindern. Insbesondere kann die Abgabestelle mindestens eine Abgabebox, insbesondere ein Schließfach, aufweisen, wobei die Abgabebox die Abgabeöffnung und/oder den Abschluss aufweisen bzw. haben kann. Zusätzlich oder alternativ kann der Abschluss eine Tür und/oder eine Klappe aufweisen, insbesondere sein. Weiter zusätzlich oder alternativ braucht bzw. kann in Abhängigkeit eines negativen Ergebnisses des Identifizierens das Öffnen und/oder das Schließen des Abschlusses nicht freigegeben und/oder das Öffnen und/oder das Schließen des Abschlusses nicht ausgeführt werden.

In einer Weiterbildung der Erfindung sind/ist das Bearbeitungsgerät aus einer Menge von, insbesondere verschiedenen, Bearbeitungsgeräten mit verschiedenen Gerätegrößen und/oder der Akkupack aus einer Menge von, insbesondere verschiedenen, Akkupacks mit verschiedenen Packgrößen. Die Abgabestelle umfasst bzw. weist eine Mehrzahl von, insbesondere schließbaren, insbesondere verschließbaren, Abgabeboxen mit verschiedenen Boxgrößen auf. Das Verfahren umfasst bzw. weist, insbesondere den Schritt, auf: Zuweisen, insbesondere automatisches und/oder logisches Zuweisen, bzw. Zuordnen, insbesondere mindestens, einer, insbesondere freien, Abgabebox, insbesondere der Mehrzahl von Abgabeboxen, mit einer Boxgröße gleich oder größer als eine Gerätegröße des Bearbeitungsgeräts und/oder eine Packgröße des Akkupacks basierend auf dem gesendeten Identifikator, insbesondere dem Bearbeitungsgerät und/oder dem Akkupack. Dies ermöglicht eine optimale Raumausnutzung der Abgabestelle. Insbesondere kann die Abgabestelle eine Fachanlage, insbesondere ein Fachanlagensystem, sein. Zusätzlich oder alternativ kann basierend auf dem Identifikator die Gerätegröße und/oder die Packgröße und/oder, insbesondere somit, die Boxgröße bestimmt, insbesondere ermittelt, werden. Basierend auf der bestimmten Boxgröße kann die Abgabebox zugewiesen werden. Weiter zusätzlich oder alternativ kann eine, insbesondere Abgeber-wahrnehmbare, Boxinformation über die zugewiesene Abgabebox, insbesondere und das Bearbeitungsgerät und/oder den Akkupack für die Abgabebox, ausgegeben und/oder übertragen werden, insbesondere im Bereich der Abgabestelle. Insbesondere kann die Boxinformation optisch und/oder akustisch ausgegeben werden. Weiter zusätzlich oder alternativ kann die zugewiesene Abgabebox, insbesondere ihr Abschluss, geöffnet werden.

In einer Weiterbildung, insbesondere einer Ausgestaltung, der Erfindung ist die Sendeeinrichtung zum, insbesondere automatischen, kabellosen Senden eines Signals aufweisend den Identifikator, insbesondere einen Wert des Identifikators, insbesondere und die Betriebs- und/oder Zustandsdaten, ausgebildet bzw. konfiguriert. Das Verfahren umfasst bzw. weist, insbesondere den Schritt, auf: Erfassen, insbesondere automatisches Erfassen, der Abgabe mittels, insbesondere automatischen, Erkennens einer Anwesenheit des Bearbeitungsgeräts und/oder des Akkupacks, insbesondere mit der Sendeeinrichtung, innerhalb eines, insbesondere schließbaren, insbesondere verschließbaren, Abgabebereichs der Abgabestelle, insbesondere der zugewiesenen Abgabebox, in Abhängigkeit eines, insbesondere automatischen, Empfangens des gesendeten Signals, insbesondere einer Signalstärke und/oder -richtung, insbesondere eines Werts der Signalstärke und/oder -richtung, oder einer der Signalstärke und/oder -richtung korrespondierenden Signalgröße, insbesondere eines Werts der Signalgröße, des empfangenen Signals. Dies ermöglicht das Verfahren erfolgreich zu beenden bzw. abzuschließen. Insbesondere kann in Abhängigkeit der erfassten Abgabe, insbesondere der erkannten Anwesenheit, das Schließen des Abschlusses freigegeben und/oder der Abschluss und/oder die Abgabebox geschlossen werden. Zusätzlich oder alternativ kann das Verfahren, insbesondere den Schritt, aufweisen: Kabelloses Senden, insbesondere automatisches und/oder wiederholtes, insbesondere periodisches, Senden, des Signals mittels der Sendeeinrichtung. Weiter zusätzlich oder alternativ kann das Verfahren, insbesondere den Schritt, aufweisen: Kabelloses Empfangen, insbesondere automatisches Empfangen, des gesendeten Signals, insbesondere und Erfassen der Signalstärke und/oder - richtung oder der Signalgröße des empfangenen Signals. Weiter zusätzlich können/kann das Senden und/oder das Empfangen des Signals innerhalb des Abgabebereichs sein. Im Übrigen sei auch auf die einschlägige Fachliteratur verwiesen.

In einer Weiterbildung der Erfindung ist das Bearbeitungsgerät ein Garten-, Forst-, Bau- und/oder Boden-Bearbeitungsgerät, insbesondere eine Säge, ein Hoch-Entaster, eine Heckenschere, ein Heckenschneider, ein Gehölzschneider, eine Astschere, ein Blasgerät, ein Laubbläser, ein Sauggerät, ein Laubsauger, ein Reinigungsgerät, ein Hochdruckreiniger, ein Spritz- und/oder Sprühgerät, ein Kehrgerät, eine Kehrwalze, eine Kehrbürste, ein Rasenmäher, eine Grasschere, ein Vertikutierer, ein Freischneider, ein Trennschleifer oder ein Gesteinsschneider. Somit kann das Bearbeitungsgerät aus der Menge von Bearbeitungsgeräten mit verschiedenen Gerätegrößen sein.

In einer Weiterbildung der Erfindung umfasst bzw. weist das Verfahren, insbesondere die Schritte, auf: Bestimmen, insbesondere automatisches Bestimmen und/oder Ermitteln, einer, insbesondere Abgeber-wahrnehmbaren, Abgabeinformation, insbesondere eines Werts der Abgabeinformation, insbesondere einer Werkstatt-, Verleih- und/oder Sharinginformation, insbesondere eines Werts der Werkstatt-, Verleih- und/oder Sharinginformation, basierend auf den gesendeten Betriebs- und/oder Zustandsdaten. Ausgeben, insbesondere automatisches Ausgeben, und/oder Übertragen, insbesondere automatisches und/oder kabelloses Übertragen, der ermittelten Abgabeinformation, insbesondere im Bereich der Abgabestelle und/oder während bzw. gleichzeitig mit der Abgabe. Dies ermöglicht dem Abgeber ein Feedback bzw. eine Übersicht für die Reinigung, die Wartung und/oder die Reparatur und/oder die Leihe und/oder das Sharing des Bearbeitungsgeräts und/oder des Akkupacks zu bekommen. Somit ermöglicht dies eine hohe Abgeber-Freundlichkeit. Insbesondere kann das Verfahren, insbesondere den Schritt, aufweisen: Kabelloses Senden, insbesondere automatisches und/oder wiederholtes, insbesondere periodisches, Senden, der Betriebs- und/oder Zustandsdaten mittels der Sendeeinrichtung. Zusätzlich oder alternativ kann das Verfahren, insbesondere den Schritt, aufweisen: Kabelloses Empfangen, insbesondere automatisches Empfangen, der gesendeten Betriebs- und/oder Zustandsdaten. Weiter zusätzlich können/kann das Senden und/oder das Empfangen der Betriebs- und/oder Zustandsdaten im Bereich der Abgabestelle sein. Weiter zusätzlich oder alternativ kann die Abgabeinformation optisch und/oder akustisch ausgegeben werden. Weiter zusätzlich oder alternativ kann das Übertragen an ein, insbesondere elektrisches und/oder externes und/oder getrenntes bzw. separates, mobiles bzw. portables Endgerät, wie z.B. ein Smartphone oder eine Smartwatch, sein. Weiter zusätzlich oder alternativ kann die Abgabeinformation über ein Ersatzteil für das Bearbeitungsgerät und/oder den Akkupack, eine, insbesondere voraussichtliche, Werkstattaufenthaltsdauer, eine Garantieübernahme oder eine Selbstübernahme der Reinigung, der Wartung und/oder der Reparatur, ein Kostenvoranschlag für die Reinigung, die Wartung und/oder die Reparatur, eine Abrechnung für die Leihe und/oder das Sharing und/oder darüber sein, dass das Bearbeitungsgerät und/oder der Akkupack auszuschalten, insbesondere zu deaktivieren, sind/ist. Insbesondere kann basierend auf den gesendeten Betriebs- und/oder Zustandsdaten das Ersatzteil bestellt werden bzw. eine Bestellung des Ersatzteils kann basierend auf den gesendeten Betriebs- und/oder Zustandsdaten ausgelöst bzw. getriggert werden.

In einer Weiterbildung der Erfindung ist an und/oder in dem Bearbeitungsgerät und/oder dem Akkupack eine, insbesondere elektrische, Einrichtung angeordnet, insbesondere befestigt. Die Einrichtung umfasst bzw. weist eine, insbesondere elektrische, Erfassungs- und/oder Auswerteeinrichtung, insbesondere und eine, insbesondere elektrische, Ermittlungseinrichtung, und die Sendeeinrichtung auf. Die Erfassungs- und/oder Auswerteeinrichtung ist dazu ausgebildet bzw. konfiguriert, mindestens eine, insbesondere physikalische, Betriebsgröße, insbesondere einen Wert der Betriebsgröße, insbesondere automatisch und/oder wiederholt, insbesondere periodisch, zu erfassen, wobei die Betriebsgröße von einem Betriebszustand des Bearbeitungsgeräts und/oder des Akkupacks abhängig ist, und die erfasste Betriebsgröße zur Ermittlung der Betriebsdaten, insbesondere automatisch, auszuwerten. Zusätzlich oder alternativ ist die Erfassungs- und/oder Auswerteeinrichtung dazu ausgebildet bzw. konfiguriert, die Betriebsdaten, insbesondere automatisch und/oder wiederholt, insbesondere periodisch, zu erfassen. Die Ermittlungseinrichtung ist dazu ausgebildet bzw. konfiguriert, die Zustandsdaten des Bearbeitungsgeräts und/oder des Akkupacks basierend auf den ermittelten und/oder erfassten Betriebsdaten, insbesondere automatisch, zu ermitteln. Insbesondere können/kann das Bearbeitungsgerät und/oder der Akkupack die Einrichtung aufweisen. Zusätzlich oder alternativ kann an und/oder in dem Bearbeitungsgerät und/oder dem Akkupack die Einrichtung werkseitig oder nachgerüstet angeordnet sein. Weiter zusätzlich oder alternativ kann die Einrichtung ein Teil des Bearbeitungsgeräts und/oder des Akkupacks sein, insbesondere wobei mit anderen Teilen des Bearbeitungsgeräts und/oder des Akkupacks die Einrichtung, insbesondere mechanisch, verbunden sein kann. Alternativ kann die Einrichtung getrennt bzw. separat von dem Bearbeitungsgerät und/oder dem Akkupack ausgebildet sein. Dies ermöglicht eine Nachrüstung der Einrichtung an und/oder in dem Bearbeitungsgerät und/oder dem Akkupack. Weiter zusätzlich oder alternativ kann die Einrichtung bei Anordnung an und/oder in dem Bearbeitungsgerät und/oder dem Akkupack in direktem bzw. unmittelbarem Kontakt mit dem Bearbeitungsgerät und/oder dem Akkupack sein. Weiter zusätzlich oder alternativ kann die Einrichtung einen, insbesondere elektrischen, Betriebs- und/oder Zustandsdatenspeicher aufweisen, wobei der Betriebs- und/oder Zustandsdatenspeicher dazu ausgebildet sein kann, die ermittelten und/oder erfassten Betriebs- und/oder Zustandsdaten, insbesondere automatisch, zu speichern. Im Übrigen sei auch auf die einschlägige Fachliteratur verwiesen.

In einer Weiterbildung der Erfindung umfassen bzw. weisen die Betriebs- und/oder Zustandsdaten Nutzungsdaten, insbesondere Werte der Nutzungsdaten, und/oder eine Laufzeit, insbesondere einen Wert der Laufzeit, und/oder eine Drehzahl, insbesondere einen Wert der Drehzahl, insbesondere eine Drehzahlstatistik, insbesondere einen Wert der Drehzahlstatistik, und/oder einen Strom, insbesondere einen Wert des Stroms, und/oder eine Spannung, insbesondere einen Wert der Spannung, und/oder eine Temperatur, insbesondere einen Wert der Temperatur, und/oder einen, insbesondere ordnungsgemäßen, Bestimmungszustand, insbesondere einen Wert des Bestimmungszustands, und/oder einen, insbesondere dringlichen, Wartungszustand, insbesondere einen Wert des Wartungszustands, und/oder einen, insbesondere akuten, Fehlerzustand, insbesondere einen Wert des Fehlerzustands, auf. Derartige Betriebs- und/oder Zustandsdaten sind für die Reinigung, die Wartung und/oder die Reparatur und/oder die Leihe und/oder das Sharing des Bearbeitungsgeräts und/oder des Akkupacks hilfreich. Im Übrigen sei auch auf die einschlägige Fachliteratur verwiesen.

In einer Weiterbildung der Erfindung umfasst bzw. weist der Identifikator eine Seriennummer, insbesondere einen Wert der Seriennummer, und/oder eine MAC-Adresse, insbesondere einen Wert der MAC-Adresse, auf, insbesondere ist eine Seriennummer und/oder eine MAC-Adresse. Insbesondere kann die auf dem, insbesondere gesendeten, Identifikator basierende Identifikatorinformation ein Typ der Seriennummer und/oder der MAC-Adresse sein. Im Übrigen sei auch auf die einschlägige Fachliteratur verwiesen.

In einer Weiterbildung der Erfindung ist die Sendeeinrichtung zum, insbesondere automatischen, kabellosen Senden eines, insbesondere des, Signals aufweisend den Identifikator, insbesondere einen Wert des Identifikators, insbesondere und die Betriebs- und/oder Zustandsdaten, ausgebildet bzw. konfiguriert. Das Signal ist ein Funk- bzw. Radio-Signal, insbesondere ein Bluetooth-Low-Energy-Signal und/oder ein ZigBee-Signal, und/oder kurzreichweitig, insbesondere eine maximale Reichweite von 10 m (Metern) aufweisend. Insbesondere kann das Verfahren, insbesondere den Schritt, aufweisen: Kabelloses Senden, insbesondere automatisches und/oder wiederholtes, insbesondere periodisches, Senden, des Signals mittels der Sendeeinrichtung. Zusätzlich oder alternativ kann das Verfahren, insbesondere den Schritt, aufweisen: Kabelloses Empfangen, insbesondere automatisches Empfangen, des gesendeten Signals. Im Übrigen sei auch auf die einschlägige Fachliteratur verwiesen.

In einer Weiterbildung der Erfindung umfasst bzw. weist das Verfahren, insbesondere die/den Schritt/e, auf: Kabelloses Empfangen, insbesondere automatisches Empfangen, des gesendeten Identifikators, insbesondere eines Werts der Identifikators, insbesondere und der gesendeten Betriebs- und/oder Zustandsdaten, in einem Empfangsbereich der Abgabestelle, insbesondere mittels einer, insbesondere elektrischen, Empfangseinrichtung, insbesondere eines, insbesondere elektrischen, Gateways. Die Empfangseinrichtung ist im Bereich der Abgabestelle angeordnet. Zusätzlich oder alternativ: Übertragen, insbesondere automatisches Übertragen, des, insbesondere empfangenen, Identifikators, insbesondere eines Werts des Identifikators, insbesondere und der gesendeten Betriebs- und/oder Zustandsdaten, an eine, insbesondere elektrische und/oder externe und/oder getrennte bzw. separate, Identifizierungs- und/oder Freigabesteuer- bzw. verwaltungs- bzw. managementeinrichtung, insbesondere von der Empfangseinrichtung und/oder über das Gateway. Der Schritt a) und/oder der Schritt b) werden/wird mindestens teilweise, insbesondere vollständig, mittels der Identifizierungs- und/oder Freigabesteuereinrichtung, insbesondere automatisch, ausgeführt. Weiter zusätzlich oder alternativ: Übertragen, insbesondere automatisches Übertragen, eines Freigabe- bzw. Zulassungsbefehls, insbesondere eines Werts des Freigabebefehls, insbesondere von der Identifizierungs- und/oder Freigabesteuereinrichtung und/oder über das Gateway, an die Abgabestelle, insbesondere eine Abgabesteuereinrichtung der Abgabestelle. Weiter zusätzlich oder alternativ wird das Verfahren mittels, insbesondere mindestens, eines, insbesondere des, Gateways, einer, insbesondere der, Identifizierungs- und/oder Freigabesteuereinrichtung und/oder der Abgabestelle, insbesondere einer Abgabesteuereinrichtung der Abgabestelle, insbesondere und einer, insbesondere elektrischen und/oder externen und/oder getrennten bzw. separaten, Werkstatt-, Verleih- und/oder Sharingsteuer- bzw. verwaltungs- bzw. managementeinrichtung, und/oder der Empfangseinrichtung, insbesondere automatisch, ausgeführt. Dies ermöglicht eine gute Topologie und/oder, insbesondere somit, eine Einfachheit des Verfahrens. Insbesondere kann der Empfangsbereich von dem Abgabebereich mindestens teilweise, insbesondere vollständig, verschieden sein. Zusätzlich oder alternativ kann die Empfangseinrichtung eine Empfangsantenne aufweisen und zum kabellosen Empfangen des Identifikators, insbesondere und der Betriebs- und/oder Zustandsdaten, mittels der, insbesondere selben, Empfangsantenne ausgebildet sein. Weiter zusätzlich oder alternativ kann das Gateway die Identifizierungs- und/oder Freigabesteuereinrichtung aufweisen. Weiter zusätzlich oder alternativ kann die Anzahl von Vergleichsinformationen in der Identifizierungs- und/oder Freigabesteuereinrichtung hinterlegt bzw. gespeichert sein bzw. die Identifizierungs- und/oder Freigabesteuereinrichtung kann die Datenbank aufweisen. Weiter zusätzlich oder alternativ können/kann die, insbesondere gesendeten Betriebs- und/oder Zustandsdaten und/oder die, insbesondere bestimmte, Abgabeinformation in der Identifizierungs- und/oder Freigabesteuer- bzw. verwaltungs- bzw. managementeinrichtung und/oder der Werkstatt-, Verleih- und/oder Sharingsteuer- bzw. verwaltungs- bzw. managementeinrichtung hinterlegt bzw. gespeichert werden. Im Übrigen sei auch auf die einschlägige Fachliteratur verwiesen.

Das erfindungsgemäße, insbesondere elektrische, System ist zum Freigeben einer, insbesondere der, Abgabe eines, insbesondere des, motorangetriebenen Bearbeitungsgeräts und/oder eines, insbesondere des, Akkupacks zur Versorgung eines, insbesondere des, Bearbeitungsgeräts mit elektrischer Antriebsleistung an eine, insbesondere die, Abgabestelle ausgebildet bzw. konfiguriert. An und/oder in dem Bearbeitungsgerät und/oder dem Akkupack ist eine, insbesondere die, Sendeeinrichtung angeordnet. Die Sendeeinrichtung ist zum kabellosen Senden von, insbesondere den, Betriebs- und/oder Zustandsdaten des Bearbeitungsgeräts und/oder des Akkupacks und eines, insbesondere des, Identifikators ausgebildet bzw. konfiguriert. Das System ist dazu ausgebildet bzw. konfiguriert: Mindestens zum Identifizieren des Bearbeitungsgeräts und/oder des Akkupacks und/oder der Sendeeinrichtung basierend auf dem gesendeten Identifikator. Zum Freigeben der Abgabe des Bearbeitungsgeräts und/oder des Akkupacks an die Abgabestelle in Abhängigkeit eines, insbesondere des, Ergebnisses mindestens des Identifizierens. Das System kann mindestens einen Teil oder sogar alle Vorteile wie vorhergehend für das Verfahren genannt ermöglichen. Insbesondere kann das System zum, insbesondere automatischen, Ausführen eines, insbesondere des, vorhergehend genannten Verfahrens ausgebildet bzw. konfiguriert sein. Zusätzlich oder alternativ kann das System zum kabellosen Empfangen des gesendeten Identifikators, insbesondere und der gesendeten Betriebs- und/oder Zustandsdaten, ausgebildet sein.

In einer Weiterbildung der Erfindung umfasst bzw. weist das System das Bearbeitungsgerät, den Akkupack, die Sendeeinrichtung, insbesondere die Einrichtung, und/oder die Abgabestelle auf. Insbesondere können/kann das Bearbeitungsgerät, der Akkupack, die Sendeeinrichtung, insbesondere die Einrichtung, und/oder die Abgabestelle, insbesondere jeweils, wie für das Verfahren vorhergehend genannt mindestens teilweise oder sogar ganz ausgebildet sein. Zusätzlich oder alternativ kann die Sendeeinrichtung, insbesondere die Einrichtung, zur Anordnung, insbesondere Befestigung, an und/oder in dem Bearbeitungsgerät und/oder dem Akkupack ausgebildet sein.

Weiter zusätzlich oder alternativ kann das System die Datenbank, die Empfangseinrichtung, das Gateway, die Identifizierungs- und/oder Freigabesteuereinrichtung, die Werkstatt-, Verleih- und/oder Sharingsteuereinrichtung und/oder eine, insbesondere elektrische, Ausgabeeinrichtung aufweisen. Die Ausgabeeinrichtung kann zum Ausgeben der Boxinformation und/oder der Abgabeinformation ausgebildet sein. Insbesondere kann die Ausgabeeinrichtung eine Anzeige und/oder einen Schallerzeuger aufweisen.

Weiter zusätzlich oder alternativ können/kann das Bearbeitungsgerät, der Akkupack, die Sendeeinrichtung, die Abgabestelle und/oder das System, insbesondere jeweils, bei einem, insbesondere dem, Verfahren wie vorhergehend genannt, insbesondere zum Freigeben einer, insbesondere der, Abgabe des Bearbeitungsgeräts und/oder des Akkupacks an die Abgabestelle, verwendet werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigt:

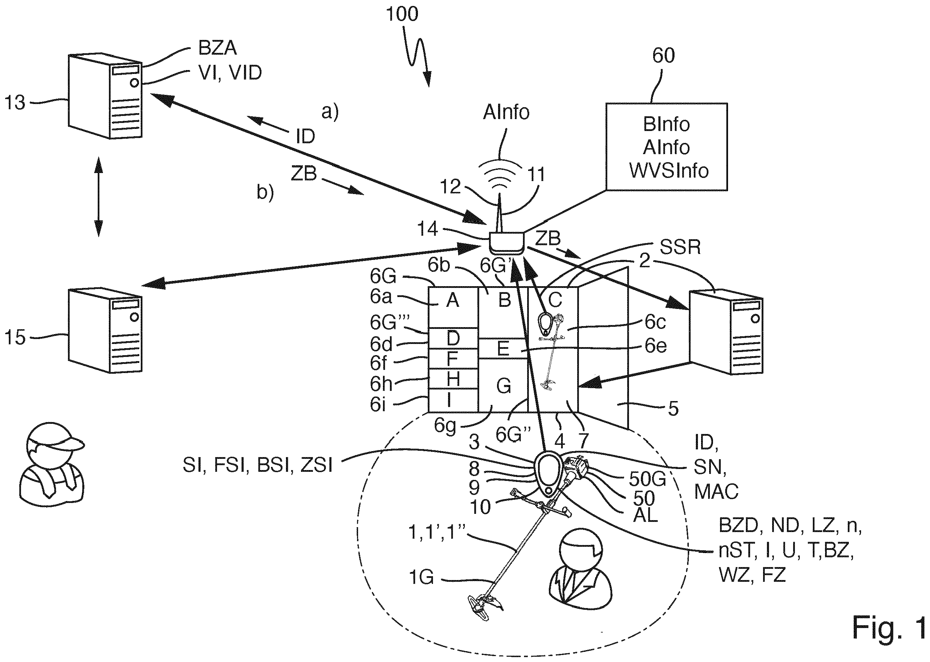

- Fig. 1: schematisch ein erfindungsgemäßes Verfahren und ein erfindungsgemäßes System.

### DETAILLIERTE BESCHREIBUNG DER AUSFÜHRUNGSBEISPIELE

Fig. 1 zeigt ein erfindungsgemäßes System 100 und ein erfindungsgemäßes Verfahren zum Freigeben einer Abgabe eines motorangetriebenen Bearbeitungsgeräts 1 und/oder eines Akkupacks 50 zur Versorgung des Bearbeitungsgeräts 1 mit elektrischer Antriebsleistung AL an eine Abgabestelle 2. An und/oder in dem Bearbeitungsgerät 1 und/oder dem Akkupack 50 ist eine Sendeeinrichtung 3 angeordnet. Die Sendeeinrichtung 3 ist zum kabellosen Senden von Betriebs- und/oder Zustandsdaten BZD des Bearbeitungsgeräts 1 und/oder des Akkupacks 50 und eines Identifikators ID ausgebildet, insbesondere sendet.

Das System 100 ist dazu ausgebildet: Mindestens zum Identifizieren des Bearbeitungsgeräts 1 und/oder des Akkupacks 50 und/oder der Sendeeinrichtung 3 basierend auf dem gesendeten Identifikator ID, insbesondere mindestens identifiziert. Zum Freigeben der Abgabe des Bearbeitungsgeräts 1 und/oder des Akkupacks 50 an die Abgabestelle 2 in Abhängigkeit eines Ergebnisses mindestens des Identifizierens, insbesondere gibt frei.

Das Verfahren weist die Schritte auf: a) mindestens Identifizieren des Bearbeitungsgeräts 1 und/oder des Akkupacks 50 und/oder der Sendeeinrichtung 3 basierend auf dem gesendeten Identifikator ID, insbesondere mittels des Systems 100. b) Freigeben der Abgabe des Bearbeitungsgeräts 1 und/oder des Akkupacks 50 an die Abgabestelle 2 in Abhängigkeit des Ergebnisses mindestens des Identifizierens, insbesondere mittels des Systems 100.

In dem gezeigten Ausführungsbeispiel weist das Bearbeitungsgerät 1 einen Elektroantriebsmotor auf. In alternativen Ausführungsbeispielen kann das Bearbeitungsgerät zusätzlich oder alternativ einen Verbrennungsantriebsmotor aufweisen.

Des Weiteren weist in dem gezeigten Ausführungsbeispiel das Verfahren auf: Kabelloses Senden des Identifikators ID, insbesondere und der Betriebs- und/oder Zustandsdaten BZD, insbesondere mittels der Sendeeinrichtung 3.

Außerdem weist das System 100 das Bearbeitungsgerät 1, den Akkupack 50, die Sendeeinrichtung 3 und/oder die Abgabestelle 2 auf.

Im Detail ist das Bearbeitungsgerät 1 ein Garten-, Forst-, Bau- und/oder Boden-Bearbeitungsgerät 1'.

In dem gezeigten Ausführungsbeispiel ist das Bearbeitungsgerät 1 ein Freischneider 1". In alternativen Ausführungsbeispielen kann das Bearbeitungsgerät eine Säge, ein Hoch-Entaster, eine Heckenschere, ein Heckenschneider, ein Gehölzschneider, eine Astschere, ein Blasgerät, ein Laubbläser, ein Sauggerät, ein Laubsauger, ein Reinigungsgerät, ein Hochdruckreiniger, ein Spritz- und/oder Sprühgerät, ein Kehrgerät, eine Kehrwalze, eine Kehrbürste, ein Rasenmäher, eine Grasschere, ein Vertikutierer, ein Trennschleifer oder ein Gesteinsschneider sein.

Weiter weist das Verfahren auf: Kabelloses Empfangen des gesendeten Identifikators ID, insbesondere und der gesendeten Betriebs- und/oder Zustandsdaten BZD, in einem Empfangsbereich 11 der Abgabestelle 2, insbesondere mittels einer Empfangseinrichtung 12, insbesondere eines Gateways 14, insbesondere des Systems 100. Die Empfangseinrichtung 12 ist im Bereich der Abgabestelle 2 angeordnet.

Zusätzlich oder alternativ: Übertragen des, insbesondere empfangenen, Identifikators ID an eine Identifizierungs- und/oder Freigabesteuereinrichtung 13, insbesondere des Systems 100, insbesondere von der Empfangseinrichtung 12 und/oder über das Gateway 14. Der Schritt a) und/oder der Schritt b) werden/wird mindestens teilweise mittels der Identifizierungs- und/oder Freigabesteuereinrichtung 13 ausgeführt.

Weiter zusätzlich oder alternativ: Übertragen eines Freigabebefehls ZB, insbesondere von der Identifizierungs- und/oder Freigabesteuereinrichtung 13 und/oder über das Gateway 14, an die Abgabestelle 2, insbesondere eine Abgabesteuereinrichtung der Abgabestelle 2.

Weiter zusätzlich oder alternativ wird das Verfahren mittels des Gateways 14, der Identifizierungs- und/oder Freigabesteuereinrichtung 13 und/oder der Abgabestelle 2, insbesondere der Abgabesteuereinrichtung der Abgabestelle 2, insbesondere und einer Werkstatt-, Verleih- und/oder Sharingsteuereinrichtung 15, insbesondere des Systems 100, und/oder der Empfangseinrichtung 12, ausgeführt.

Zudem weist der Schritt a) auf: Kontrollieren einer Berechtigung BZA zum Freigeben der Abgabe basierend auf dem gesendeten Identifikator ID, insbesondere mittels der Identifizierungs- und/oder Freigabesteuereinrichtung 13. Der Schritt b) weist auf: Freigeben der Abgabe in Abhängigkeit eines Ergebnisses des Kontrollierens, insbesondere mittels der Identifizierungs- und/oder Freigabesteuereinrichtung 13.

Des Weiteren weist der Schritt a), insbesondere das Identifizieren und/oder das Kontrollieren, auf: Vergleichen des gesendeten Identifikators ID oder einer auf dem gesendeten Identifikator basierenden Identifikatorinformation mit einer, insbesondere hinterlegten, Anzahl von Vergleichsinformationen VI, insbesondere einer Anzahl von Vergleichsidentifikatoren VID, insbesondere mittels der Identifizierungs- und/oder Freigabesteuereinrichtung 13. Der Schritt b) weist auf: Freigeben der Abgabe in Abhängigkeit eines Ergebnisses des Vergleichens, insbesondere mittels der Identifizierungs- und/oder Freigabesteuereinrichtung 13.

Außerdem weist die Abgabestelle 2 mindestens eine Abgabeöffnung 4 und mindestens einen Abschluss 5 der Abgabeöffnung 4 auf. Der Schritt b) weist auf: Freigeben eines Öffnens und/oder eines Schließens und/oder Öffnen und/oder Schließen des Abschlusses 5 in Abhängigkeit des Ergebnisses des Identifizierens, insbesondere mittels der Identifizierungs- und/oder Freigabesteuereinrichtung 13 und/oder der Abgabestelle 2.

In dem gezeigten Ausführungsbeispiel weist die Abgabestelle 2 neun Abgabeöffnungen 4 und neun Abschlüsse 5 auf. In alternativen Ausführungsbeispielen kann die Abgabestelle nur eine einzige Abgabeöffnung und nur einen einzigen Abschluss oder mindestens zwei, insbesondere mindestens fünf, insbesondere mindestens zehn, Abgabeöffnungen und mindestens zwei, insbesondere mindestens fünf, insbesondere mindestens zehn, Abschlüsse aufweisen.

Weiter sind/ist das Bearbeitungsgerät 1 aus einer Menge von Bearbeitungsgeräten mit verschiedenen Gerätegrößen und/oder der Akkupack 50 aus einer Menge von Akkupacks mit verschiedenen Packgrößen. Die Abgabestelle 2 weist eine Mehrzahl von Abgabeboxen 6a, 6b, 6c, 6d, 6e, 6f, 6g, 6h, 6i mit verschiedenen Boxgrößen 6G, 6G', 6G", 6G''' auf. Das Verfahren weist auf: Zuweisen einer Abgabebox 6c mit einer Boxgröße 6G" gleich oder größer als eine Gerätegröße 1G des Bearbeitungsgeräts 1, in dem gezeigten Ausführungsbeispiel des Freischneiders 1", und/oder eine Packgröße 50G des Akkupacks 50 basierend auf dem gesendeten Identifikator ID, insbesondere mittels der Identifizierungs- und/oder Freigabesteuereinrichtung 13 und/oder der Abgabestelle 2.

In dem gezeigten Ausführungsbeispiel weist die Abgabestelle 2 neun Abgabeboxen 6a, 6b, 6c, 6d, 6e, 6f, 6g, 6h, 6i und/oder vier verschiedene Boxgrößen 6G, 6G', 6G", 6G''' auf. In alternativen Ausführungsbeispielen kann die Abgabestelle mindestens zwei, insbesondere mindestens fünf, insbesondere mindestens zehn, Abgabeboxen und/oder mindestens zwei, insbesondere mindestens fünf, insbesondere mindestens zehn, Boxgrößen aufweisen.

Zudem weist das System 100 eine Ausgabeeinrichtung 60, in dem gezeigten Ausführungsbeispiel eine Anzeige, auf, insbesondere im Bereich der Abgabestelle 2. Die Ausgabeeinrichtung 60 ist zum, insbesondere optischen, Ausgeben einer Boxinformation Blnfo über die zugewiesene Abgabebox 6c, insbesondere und das Bearbeitungsgerät 1 und/oder den Akkupack 50 für die Abgabebox 6c, ausgebildet, insbesondere gibt aus.

Zusätzlich oder alternativ wird die Boxinformation Blnfo übertragen, insbesondere im Bereich der Abgabestelle 2, insbesondere mittels des Systems 100, insbesondere des Gateways 14.

Weiter zusätzlich oder alternativ weist die Abgabebox 6c die Abgabeöffnung 4 und/oder den Abschluss 5 auf. Die zugewiesene Abgabebox 6c, insbesondere ihr Abschluss 5, wird geöffnet, insbesondere mittels der Identifizierungs- und/oder Freigabesteuereinrichtung 13 und/oder der Abgabestelle 2.

Des Weiteren ist die Sendeeinrichtung 3 zum kabellosen Senden eines Signals Sl aufweisend den Identifikator ID, insbesondere und die Betriebs- und/oder Zustandsdaten BZD, ausgebildet, insbesondere sendet.

Außerdem weist in dem gezeigten Ausführungsbeispiel das Verfahren auf: Kabelloses Senden des Signals Sl, insbesondere mittels der Sendeeinrichtung 3.

Weiter weist das Verfahren auf: Erfassen der Abgabe mittels Erkennens einer Anwesenheit des Bearbeitungsgeräts 1 und/oder des Akkupacks 50, innerhalb eines Abgabebereichs 7 der Abgabestelle 2, insbesondere der zugewiesenen, insbesondere und geöffneten, Abgabebox 6c, in Abhängigkeit eines Empfangens des gesendeten Signals Sl, insbesondere einer Signalstärke und/oder -richtung SSR oder einer der Signalstärke und/oder -richtung korrespondierenden Signalgröße des empfangenen Signals Sl, insbesondere mittels der Empfangseinrichtung 12.

In dem gezeigten Ausführungsbeispiel weist das Verfahren auf: Kabelloses Empfangen des gesendeten Signals Sl, insbesondere und Erfassen der Signalstärke und/oder -richtung SSR oder der Signalgröße des empfangenen Signals Sl, insbesondere mittels der Empfangseinrichtung 12.

Zudem wird in Abhängigkeit der erfassten Abgabe, insbesondere der erkannten Anwesenheit, das Schließen des Abschlusses 5 freigegeben und/oder der Abschluss 5 und/oder die, insbesondere geöffnete, Abgabebox 6c geschlossen.

Des Weiteren weist das Verfahren auf: Bestimmen einer, insbesondere Abgeber-wahrnehmbaren, Abgabeinformation AInfo, insbesondere einer Werkstatt-, Verleih- und/oder Sharinginformation WVSInfo, basierend auf den gesendeten Betriebs- und/oder Zustandsdaten BZD, insbesondere mittels des Systems 100, insbesondere der Werkstatt-, Verleih- und/oder Sharingsteuereinrichtung 15. Ausgeben und/oder Übertragen der ermittelten Abgabeinformation AInfo, insbesondere im Bereich der Abgabestelle 2 und/oder während der Abgabe, insbesondere mittels der Ausgabeeinrichtung 60 und/oder des Systems 100, insbesondere des Gateways 14.

In dem gezeigten Ausführungsbeispiel ist die Ausgabeeinrichtung 60 zum, insbesondere optischen, Ausgeben der Abgabeinformation AInfo ausgebildet, insbesondere gibt aus.

Außerdem ist an und/oder in dem Bearbeitungsgerät 1 und/oder dem Akkupack 50 eine Einrichtung 8 angeordnet. Die Einrichtung 8 weist eine Erfassungs- und/oder Auswerteeinrichtung 9, insbesondere und eine Ermittlungseinrichtung 10, und die Sendeeinrichtung 3 auf. Die Erfassungs- und/oder Auswerteeinrichtung 9 ist dazu ausgebildet, mindestens eine Betriebsgröße zu erfassen, wobei die Betriebsgröße von einem Betriebszustand des Bearbeitungsgeräts 1 und/oder des Akkupacks 50 abhängig ist, und die erfasste Betriebsgröße zur Ermittlung der Betriebsdaten BD auszuwerten. Zusätzlich oder alternativ ist die Erfassungs- und/oder Auswerteeinrichtung 9 dazu ausgebildet, die Betriebsdaten BD zu erfassen. Die Ermittlungseinrichtung 10 ist dazu ausgebildet, die Zustandsdaten ZD des Bearbeitungsgeräts 1 und/oder des Akkupacks 50 basierend auf den ermittelten und/oder erfassten Betriebsdaten BD zu ermitteln.

In dem gezeigten Ausführungsbeispiel weist das System 100 die Einrichtung 8 auf.

Weiter weisen die Betriebs- und/oder Zustandsdaten BZD Nutzungsdaten ND und/oder eine Laufzeit LZ und/oder eine Drehzahl n, insbesondere eine Drehzahlstatistik nST, und/oder einen Strom I und/oder eine Spannung U und/oder eine Temperatur T und/oder einen Bestimmungszustand BZ und/oder einen Wartungszustand WZ und/oder einen Fehlerzustand FZ auf.

Zudem weist der Identifikator ID eine Seriennummer SN und/oder eine MAC-Adresse MAC auf. Insbesondere ist der Identifikator ID eine Seriennummer SN und/oder eine MAC-Adresse MAC.

Des Weiteren ist das Signal Sl ein Funk-Signal FSI, insbesondere ein Bluetooth-Low-Energy-Signal BSI und/oder ein ZigBee-Signal ZSI, und/oder kurzreichweitig, insbesondere eine maximale Reichweite von 10 m aufweisend.

Im Übrigen sind die Abgabestelle 2, insbesondere die Abgabesteuereinrichtung der Abgabestelle 2, die Empfangseinrichtung 12, die Identifizierungs- und/oder Freigabesteuereinrichtung 13, das Gateway 14, die Werkstatt-, Verleih- und/oder Sharingsteuereinrichtung 15 und/oder die Ausgabeeinrichtung 60, insbesondere über das Gateway 14, miteinander verbunden, insbesondere kommunikationsverbunden.

Wie die gezeigten und oben erläuterten Ausführungsbeispiele deutlich machen, stellt die Erfindung ein Verfahren und ein System zum Freigeben einer Abgabe eines motorangetriebenen Bearbeitungsgeräts und/oder eines Akkupacks zur Versorgung eines Bearbeitungsgeräts mit elektrischer Antriebsleistung an eine Abgabestelle bereit, wobei das Verfahren und das System, insbesondere jeweils, verbesserte Eigenschaften aufweisen.

## Patentansprüche

1. Verfahren zum Freigeben einer Abgabe eines motorangetriebenen Bearbeitungsgeräts (1) und/oder eines Akkupacks (50) zur Versorgung eines Bearbeitungsgeräts (1) mit elektrischer Antriebsleistung (AL) an eine Abgabestelle (2), wobei an und/oder in dem Bearbeitungsgerät (1) und/oder dem Akkupack (50) eine Sendeeinrichtung (3) angeordnet ist, wobei die Sendeeinrichtung (3) zum kabellosen Senden von Betriebs- und/oder Zustandsdaten (BZD) des Bearbeitungsgeräts (1) und/oder des Akkupacks (50) und eines Identifikators (ID) ausgebildet ist, und wobei das Verfahren die Schritte aufweist:
a) mindestens Identifizieren des Bearbeitungsgeräts (1) und/oder des Akkupacks (50) und/oder der Sendeeinrichtung (3) basierend auf dem gesendeten Identifikator (ID), und
b) Freigeben der Abgabe des Bearbeitungsgeräts (1) und/oder des Akkupacks (50) an die Abgabestelle (2) in Abhängigkeit eines Ergebnisses mindestens des Identifizierens.

2. Verfahren nach Anspruch 1,
- wobei der Schritt a) aufweist: Kontrollieren einer Berechtigung (BZA) zum Freigeben der Abgabe basierend auf dem gesendeten Identifikator (ID), und
- wobei der Schritt b) aufweist: Freigeben der Abgabe in Abhängigkeit eines Ergebnisses des Kontrollierens.

3. Verfahren nach Anspruch 1 oder 2,
- wobei der Schritt a), insbesondere das Identifizieren und/oder das Kontrollieren, aufweist: Vergleichen des gesendeten Identifikators (ID) oder einer auf dem gesendeten Identifikator basierenden Identifikatorinformation mit einer, insbesondere hinterlegten, Anzahl von Vergleichsinformationen (VI), insbesondere einer Anzahl von Vergleichsidentifikatoren (VID), und
- wobei der Schritt b) aufweist: Freigeben der Abgabe in Abhängigkeit eines Ergebnisses des Vergleichens.

4. Verfahren nach einem der vorhergehenden Ansprüche,
- wobei die Abgabestelle (2) mindestens eine Abgabeöffnung (4) und mindestens einen Abschluss (5) der Abgabeöffnung (4) aufweist,
- wobei der Schritt b) aufweist: Freigeben eines Öffnens und/oder eines Schließens und/oder Öffnen und/oder Schließen des Abschlusses (5) in Abhängigkeit des Ergebnisses des Identifizierens.

5. Verfahren nach einem der vorhergehenden Ansprüche,
- wobei das Bearbeitungsgerät (1) aus einer Menge von Bearbeitungsgeräten mit verschiedenen Gerätegrößen und/oder der Akkupack (50) aus einer Menge von Akkupacks mit verschiedenen Packgrößen sind/ist,
- wobei die Abgabestelle (2) eine Mehrzahl von Abgabeboxen (6a, 6b, 6c, 6d, 6e, 6f, 6g, 6h, 6i) mit verschiedenen Boxgrößen (6G, 6G', 6G", 6G''') aufweist,
- wobei das Verfahren aufweist:
- Zuweisen einer Abgabebox (6c) mit einer Boxgröße (6G") gleich oder größer als eine Gerätegröße (1G) des Bearbeitungsgeräts (1) und/oder eine Packgröße (50G) des Akkupacks (50) basierend auf dem gesendeten Identifikator (ID).

6. Verfahren nach einem der vorhergehenden Ansprüche, insbesondere nach Anspruch 5,
- wobei die Sendeeinrichtung (3) zum kabellosen Senden eines Signals (Sl) aufweisend den Identifikator (ID) ausgebildet ist,
- wobei das Verfahren aufweist:
- Erfassen der Abgabe mittels Erkennens einer Anwesenheit des Bearbeitungsgeräts (1) und/oder des Akkupacks (50) innerhalb eines Abgabebereichs (7) der Abgabestelle (2), insbesondere der zugewiesenen Abgabebox (6c), in Abhängigkeit eines Empfangens des gesendeten Signals (Sl), insbesondere einer Signalstärke und/oder -richtung (SSR) oder einer der Signalstärke und/oder -richtung (SSR) korrespondierenden Signalgröße des empfangenen Signals (Sl).

7. Verfahren nach einem der vorhergehenden Ansprüche,
- wobei das Bearbeitungsgerät (1) ein Garten-, Forst-, Bau- und/oder Boden-Bearbeitungsgerät (1'), insbesondere eine Säge, ein Hoch-Entaster, eine Heckenschere, ein Heckenschneider, ein Gehölzschneider, eine Astschere, ein Blasgerät, ein Laubbläser, ein Sauggerät, ein Laubsauger, ein Reinigungsgerät, ein Hochdruckreiniger, ein Spritz- und/oder Sprühgerät, ein Kehrgerät, eine Kehrwalze, eine Kehrbürste, ein Rasenmäher, eine Grasschere, ein Vertikutierer, ein Freischneider (1"), ein Trennschleifer oder ein Gesteinsschneider, ist.

8. Verfahren nach einem der vorhergehenden Ansprüche, wobei das Verfahren aufweist:
- Bestimmen einer, insbesondere Abgeber-wahrnehmbaren, Abgabeinformation (AInfo), insbesondere einer Werkstatt-, Verleih- und/oder Sharinginformation (WVSlnfo), basierend auf den gesendeten Betriebs- und/oder Zustandsdaten (BZD), und
- Ausgeben und/oder Übertragen der ermittelten Abgabeinformation (AInfo), insbesondere im Bereich der Abgabestelle (2) und/oder während der Abgabe.

9. Verfahren nach einem der vorhergehenden Ansprüche,
- wobei an und/oder in dem Bearbeitungsgerät (1) und/oder dem Akkupack (50) eine Einrichtung (8) angeordnet ist, wobei die Einrichtung (8) aufweist:
- eine Erfassungs- und/oder Auswerteeinrichtung (9), wobei die Erfassungs- und/oder Auswerteeinrichtung (9) dazu ausgebildet ist, mindestens eine Betriebsgröße zu erfassen, wobei die Betriebsgröße von einem Betriebszustand des Bearbeitungsgeräts (1) und/oder des Akkupacks (50) abhängig ist, und die erfasste Betriebsgröße zur Ermittlung der Betriebsdaten (BD) auszuwerten, und/oder die Betriebsdaten (BD) zu erfassen,
- insbesondere und eine Ermittlungseinrichtung (10), wobei die Ermittlungseinrichtung (10) dazu ausgebildet ist, die Zustandsdaten (ZD) des Bearbeitungsgeräts (1) und/oder des Akkupacks (50) basierend auf den ermittelten und/oder erfassten Betriebsdaten (BD) zu ermitteln,
- und die Sendeeinrichtung (3).

10. Verfahren nach einem der vorhergehenden Ansprüche,
- wobei die Betriebs- und/oder Zustandsdaten (BZD) Nutzungsdaten (ND) und/oder eine Laufzeit (LZ) und/oder eine Drehzahl (n), insbesondere eine Drehzahlstatistik (nST), und/oder einen Strom (I) und/oder eine Spannung (U) und/oder eine Temperatur (T) und/oder einen Bestimmungszustand (BZ) und/oder einen Wartungszustand (WZ) und/oder einen Fehlerzustand (FZ) aufweisen.

11. Verfahren nach einem der vorhergehenden Ansprüche,
- wobei der Identifikator (ID) eine Seriennummer (SN) und/oder eine MAC-Adresse (MAC) aufweist, insbesondere eine Seriennummer (SN) und/oder eine MAC-Adresse (MAC) ist.

12. Verfahren nach einem der vorhergehenden Ansprüche,
- wobei die Sendeeinrichtung (3) zum kabellosen Senden eines Signals (Sl) aufweisend den Identifikator (ID) ausgebildet ist,
- wobei das Signal (Sl) ein Funk-Signal (FSl), insbesondere ein Bluetooth-Low-Energy-Signal (BSl) und/oder ein ZigBee-Signal (ZSl), und/oder kurzreichweitig, insbesondere eine maximale Reichweite von 10 m aufweisend, ist.

13. Verfahren nach einem der vorhergehenden Ansprüche,
- wobei das Verfahren aufweist:
- kabelloses Empfangen des gesendeten Identifikators (ID) in einem Empfangsbereich (11) der Abgabestelle (2), insbesondere mittels einer Empfangseinrichtung (12), wobei die Empfangseinrichtung (12) im Bereich der Abgabestelle (2) angeordnet ist, und/oder,
- Übertragen des, insbesondere empfangenen, Identifikators (ID) an eine Identifizierungs- und/oder Freigabesteuereinrichtung (13), und wobei der Schritt a) und/oder der Schritt b) mindestens teilweise mittels der Identifizierungs- und/oder Freigabesteuereinrichtung (13) ausgeführt werden/wird, und/oder
- Übertragen eines Freigabebefehls (ZB), insbesondere von der Identifizierungs- und/oder Freigabesteuereinrichtung (13), an die Abgabestelle (2), und/oder
- wobei das Verfahren mittels eines Gateways (14), einer Identifizierungs- und/oder Freigabesteuereinrichtung (13) und/oder der Abgabestelle (2), insbesondere und einer Werkstatt-, Verleih- und/oder Sharingsteuereinrichtung (15), ausgeführt wird.

14. System (100) zum Freigeben einer Abgabe eines motorangetriebenen Bearbeitungsgeräts (1) und/oder eines Akkupacks (50) zur Versorgung eines Bearbeitungsgeräts (1) mit elektrischer Antriebsleistung (AL) an eine Abgabestelle (2), insbesondere zum Ausführen eines Verfahrens nach einem der vorhergehenden Ansprüche, wobei an und/oder in dem Bearbeitungsgerät (1) und/oder dem Akkupack (50) eine Sendeeinrichtung (3) angeordnet ist, wobei die Sendeeinrichtung (3) zum kabellosen Senden von Betriebs- und/oder Zustandsdaten (BZD) des Bearbeitungsgeräts (1) und/oder des Akkupacks (50) und eines Identifikators (ID) ausgebildet ist, und wobei das System (100) dazu ausgebildet ist:
- mindestens zum Identifizieren des Bearbeitungsgeräts (1) und/oder des Akkupacks (50) und/oder der Sendeeinrichtung (3) basierend auf dem gesendeten Identifikator (ID), und
- zum Freigeben der Abgabe des Bearbeitungsgeräts (1) und/oder des Akkupacks (50) an die Abgabestelle (2) in Abhängigkeit eines Ergebnisses mindestens des Identifizierens.

15. System (100) nach Anspruch 14,
- wobei das System (100) das Bearbeitungsgerät (1), den Akkupack (50), die Sendeeinrichtung (3) und/oder die Abgabestelle (2) aufweist.
